(19) Europäisches Patentamt
European Patent Office
Office européen des brevets

(11) Veröffentlichungsnummer: **0 110 053**
**B1**

(12) **EUROPÄISCHE PATENTSCHRIFT**

(45) Veröffentlichungstag der Patentschrift: **20.11.86**

(51) Int. Cl.[4]: **C 04 B 35/56**

(21) Anmeldenummer: **83109694.6**

(22) Anmeldetag: **28.09.83**

(54) **Verfahren zum Herstellen eines dichten polykristallinen Formkörpers aus SiC.**

(30) Priorität: **25.11.82 DE 3243570**

(43) Veröffentlichungstag der Anmeldung: **13.06.84 Patentblatt 84/24**

(45) Bekanntmachung des Hinweises auf die Patenterteilung: **20.11.86 Patentblatt 86/47**

(84) Benannte Vertragsstaaten: **AT BE CH DE FR GB IT LI LU NL SE**

(56) Entgegenhaltungen:
**EP - A - 0 027 972**
**EP - A - 0 052 851**
**DE - A - 2 912 443**
**FR - A - 2 502 612**
**GB - A - 2 012 309**
**GB - A - 2 031 027**

**CHEMICAL ABSTRACTS, Band 93, Nr. 16, Oktober 1980, Seite 282, Nr. 154706s, Columbus, Ohio, USA S. PROCHAZKA et al.: "Atmosphere effects in sintering of silicon carbide"**
**CHEMICAL ABSTRACTS, Band 96, Nr. 6, Februar 1982, Seite 293, Nr. 39708u, Columbus, Ohio, USA**

(73) Patentinhaber: **Hutschenreuther AG, D-8672 Selb (DE)**

(72) Erfinder: **Müller-Zell, Axel, Dr., Plössberger Weg 14, D-8672 Selb (DE)**
Erfinder: **Hahn, Christoph, Dr., Bei der Linde 20, D-8672 Selb (DE)**

(74) Vertreter: **Patentanwälte *Czowalla* . Matschkur + Partner, Dr.-Kurt-Schumacher-Strasse 23 Postfach 9109, D-8500 Nürnberg 11 (DE)**

EP 0 110 053 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung richtet sich auf ein Verfahren zum Herstellen eines dichten polykristallinen Formkörpers aus SiC mit einer Dichte von mindestens 98% der theoretischen Dichte des SiC und einer Biegebruchfestigkeit >500 N/mm$^2$ bei einem Weibullmodul m > 15 durch Sintern von SiC unter Zugabe von C-haltigen Verbindungen und von B- und/oder Al-haltigen Verbindungen.

Der keramische Werkstoff Siliciumcarbid zeichnet sich aus durch eine Kombination von günstigen chemischen und physikalischen Eigenschaften, wie geringe Dichte, niedrige thermische Ausdehnung, gute Oxidations- und Korrosionsbeständigkeit und beachtliche Festigkeit auch bei hohen Temperaturen bis ca. 1400 °C, einschliesslich einer hohen Kriechfestigkeit, einem niedrigen Reibungskoeffizienten und extremer Härte. Hieraus resultiert eine sehr gute Temperaturwechselbeständigkeit. Siliciumcarbid eignet sich infolgedessen als keramischer Hochleistungswerkstoff insbesondere für eine Anwendung im Hochtemperaturbereich im allgemeinen Maschinenbau, z.B. für den Einsatz bei Gasturbinen, bei Motoren, für Gleitlager u.dgl.

Formteile aus SiC können durch Reaktionssintern, Drucksintern oder neuerdings auch im Wege des drucklosen Sinterns hergestellt werden. Zum reaktionsgebundenen SiC erörtert die GB-A 1 180 918, dass aus einer Mischung aus SiC-Pulver und Kohlenstoff Formkörper hergestellt werden, die bei Temperaturen von 1600–1700 °C mit Silicium infiltriert werden. Eine arteigene Bindung wird über das neugebildete SiC bewerkstelligt. Das reaktionsgebundene Endprodukt enthält etwa 8–12 Vol-% freies Silicium. Dadurch ist bei Formteilen bei Temperaturen oberhalb des Schmelzpunktes von Silicium (1410 °C) ein starker Festigkeitsabfall zu verzeichnen.

Das Sintern von SiC unter gleichzeitiger Anwendung von Temperatur und Druck, das Heisspressen, unter Zusatz von geringen Mengen an Bor, Eisen, Aluminium u.a. ist seit langem bekannt. In der US-A 3 836 673 (DE-B 23 14 384) wird das Heisspressen von α SiC-Pulvern mit einem Zusatz von Al-pulver erwähnt. Die DE-A 23 63 036 beschreibt das Heisspressen von β-Siliciumcarbid mit Bor und die DE-A 28 13 665 das Heisspressen mit Aluminiumdiborat. Mit solchem unter Druck gesinterten SiC werden Festigkeiten von 600 N/mm$^2$ und mehr erreicht. Bei hohen Temperaturen ist jedoch ein starker Abfall der Festigkeit zu verzeichnen wie eine Verringerung der Oxidationsbeständigkeit. Die Heisspresstechnologie ist darüber hinaus in konstruktiver und wirtschaftlicher Hinsicht aufwendig und gestattet ausserdem nur die Herstellung relativ einfacher Formen. Hingegen eignet sich die Heisspresstechnik weniger zur Produktion von komplizierten Bauteilen.

Neben diesem Verfahren ist das heissisostatische Pressen (HIP-Technik) bekannt. Dieses ist jedoch noch aufwendiger als das bekannte Heisspressen. Der Pulverpressling wird in einer gasdichten Hülle in einem Hochtemperatur-Autoklaven verdichtet, was ein hochtemperaturbeständiges und plastisches Umhüllungsmaterial verlangt.

Das drucklose Sintern gestattet die Herstellung auch komplexer Formteile ohne kostspielige und zeitaufwendige Nachbearbeitung. Bekannt ist das drucklose Sintern von SiC-Pulvern mit geringen Zusätzen an Bor und/oder B-Verbindungen und Kohlenstoff sowie Aluminium und/oder Al-Verbindungen und Kohlenstoff. Das Ausgangspulver besteht entweder aus dem kubischen β-SiC oder dem überwiegend hexagonalen α-SiC. US-A 4 004 934 (entsprechend DE-A 24 49 662) beschreibt die Herstellung von Formkörpern, ausgehend von β-SiC mit Zusätzen von 0,3–3 Gew.-% Bor und 0,1–1 Gew.-% Kohlenstoff. Der kaltgepresste Formkörper wird dann bei einer Temperatur von 1900–2100 °C zu einer relativen Dichte von über 85% gesintert. In DE-A 26 24 641 sowie DE-A 26 16 817 wird die Möglichkeit beschrieben, SiC der α-Modifikation drucklos zu sintern. Als Sinterzusätze werden ebenfalls Bor und Kohlenstoff genannt. Aus DE-A 26 24 641 geht ein Sinterkörper mit einer relativen Dichte von mindestens 75% hervor, dessen Sintertemperaturen bei 1900–2500 °C liegen. Die Möglichkeit des Einsatzes der α-Modifikation des SiC liegt darin begründet, dass es hier zu keiner Phasenumwandlung kommt, wie sie der β-Modifikation beim Überschreiten einer bestimmten Sintertemperatur eigen ist, und ein Riesenkornwachstum zu verzeichnen ist, welches einer weiteren Verdichtung entgegenwirkt. In der DE-A 29 12 443 wird ein Verfahren zur Herstellung eines drucklos gesinterten SiC-Formkörpers angegeben. Die Pulvermischung setzt sich zusammen aus SiC der β- oder α-Modifikation oder Mischungen davon, einem Al-haltigen Zusatz in einer Menge von äquivalent 0–4 Gew.-% Aluminium und einem C-haltigen Zusatz in einer Menge von äquivalent 0,4–6 Gew.-% Kohlenstoff. Nach der Formgebung der Pulvermischung wird der Formkörper bei 1850–2100 °C zu einer relativen Dichte von mindestens 85% gesintert. Auch in der EP-A 00 04 031 wird die Verarbeitung eines α-SiC in Submikronpulverform unter Zusätzen von Al-haltigem Material sowie C-haltigen Zusätzen bei Temperaturen von 2000–2300 °C zu einem dichten polykristallinen Formkörper aus α-SiC im Wege des drucklosen Sinterns beschrieben.

Die DE-A 30 23 425 offenbart ein Verfahren zum Sintern eines SiC-Pulvers mit einem B-haltigen und einem C-haltigen Material in einer methanhaltigen Atmosphäre. In der DE-A 30 44 161 wird ein Verfahren beschrieben, in dem SiC durch druckloses Sintern von α- und/oder β-SiC unter Zugabe von bis zu 3 Gew.-% Bor in einer Schutzgasatmosphäre, die pyrolisierbare Kohlenwasserstoffe enthält, drucklos gesintert wird. Ausserdem wird der Formkörper einer aufwendigen und kostspieligen heissisostatischen Nachbehandlung unterworfen.

Erfahrungsgemäss kann sich eine Methan oder pyrolisierbare Kohlenwasserstoffe enthaltende Atmosphäre bei hohen Temperaturen zersetzen,

wobei sich undefinierbare Spaltprodukte sowie Wasserstoffe bilden. Der Wasserstoff erhöht dann die thermische Leitfähigkeit der Atmosphäre beträchtlich und führt zu einer Verschlechterung des Wärmehaushaltes.

In der EP-A-00 27 972 wird über eine Vakuumbehandlung eines α-SiC-Ausgangsmaterials bei Temperaturen über 1200 °C in einem Graphit-Widerstandsofen berichtet. Bei dem Verfahren nach GB-A-20 12 309 werden $B_2O_3$ und $H_3BO_3$ als flüssige Sinterhilfsmittel genannt, die nach dem Ausheizen bei 500 °C bis 1000 °C in den ausgeheizten porösen Körper eingebracht werden. Der so behandelte Körper wird anschliessend gesintert. Gesintert wird SiC vorwiegend unter Schutzgasatmosphäre. In der FR-A-2 502 612 werden $N_2$, Ar, He, Ne, $H_2$ oder CO als nichtsauerstoffhaltige Atmosphäre angegeben, wobei es auch möglich ist, unter Überdruck zu arbeiten.

Das drucklose Sintern von SiC unter Zusatz von Aluminium und Kohlenstoff nach der EP-A-00 04 031 lässt Dichten von etwa 96% der theoretischen Dichte des SiC und Festigkeiten von 500 N/mm$^2$ erreichen.

Es hat sich gezeigt, dass das drucklose Sintern von SiC mit B-haltigen Zusätzen zu sowohl hoher Dichte, als auch hoher Festigkeit nur schwer beherrschbar ist. B- aber auch Al-haltige SiC-Sinterkörper dieser Art zeigen noch immer ein zu inhomogenes Mikrogefüge, um den heutigen Ansprüchen hinsichtlich Festigkeit und Streuung zu genügen. Das mechanische Nassmischen stellt das derzeitig am häufigsten angewandte Dispersionsverfahren dar, und es wird im Attritor die intensivste Homogenisierung erreicht. Die angeführten Verfahrensbeispiele zeigen, dass eine weitere Steigerung der Dichte bzw. der Festigkeit und geringere Streubreite derselben nicht ausschliesslich durch Variieren der Sinteradditive und der Sinterbedingungen erreicht werden kann. Es ist vielmehr gleichzeitig auf ein feines und reines Ausgangsmaterial ebenso zu achten, wie auf eine höchst homogene, gleichmässige Verteilung und Einbringung der Sinteradditive. Eine ungenügende Homogenisierung der Komponenten, beispielsweise in Kugelmühlen durch Agglomeratbindung, verursacht Gefügefehler mit spontaner Rissbildung im Sinterkörper. Unter diesen Bedingungen kann dann auch eine gezielt abgestimmte Atmosphärenführung ihre Wirkung tun, damit sich eine Atmosphärenänderung erst ab einer bestimmten Temperatur positiv auswirken kann, wohingegen die gleiche Atmosphäre bei z.B. einer niedrigeren Temperatur nur schädlich wäre.

Es stellt sich angesichts dieses Standes der Technik die Aufgabe nach einem wirtschaftlich vorteilhaften und technisch verbesserten Verfahren zum Herstellen eines Formkörpers aus SiC von grösstmöglicher Homogenität des Gefüges, höchster Dichte und grösster Festigkeit bei zugleich gerinstmöglicher Streubreite der Eigenschaften.

Diese Aufgabe löst die Erfindung durch die folgenden Verfahrensschritte:

a) Reinigen eines feinstgemahlenen verunreinigten und mit organischem C-haltigen Material vermischen α- und/oder β-SiC durch Pyrolyse unter Schutzgas oder Vakuum zur Befreiung von anhaftenden $SiO_2$-Verunreinigungen,

b) Reinigen von möglichen C-Resten durch Glühen in einer $CO_2$-Atmosphäre,

c) Zusatz eines temporären Bindemittels und Formgebung des gereinigten, B-, Al- und C-freien α- und/oder β-SiC durch ein übliches keramisches Formgebungsverfahren zu einem Formkörper,

d) Tränken des Formkörpers in grünem oder vorgesintertem Zustand mit in organischen Lösungsmitteln gelösten C-haltigen, carbonisierbaren, organischen Materialien und mit gegebenenfalls in organischen Lösungsmitteln gelösten organischen B- und/oder organischen Al-Verbindungen, wobei das C-, B- und/oder Al-haltige Material eine einzige Substanz sein kann,

e) Pyrolyse des getränkten Formkörpers und

f) Sintern bei Temperaturen >1800 °C in einer Si- und N-haltigen reduzierenden Co-enthaltenden Atmosphäre.

Bei dieser Behandlung wird das in der Reinigungsstufe zugesetzte organische Lösungsmittel verdampft und das Pulvergemisch einem Glühprozess im Vakuum unterzogen. Dabei reagiert der durch Pyrolyse entstandene Kohlenstoff mit dem am SiC-Korn anhaftenden $SiO_2$ nach der folgenden bekannten Gleichung:

$$SiO_2 + 3\,C \rightarrow SiC + 2\,CO.$$

Ein möglicher Überschuss an freiem Kohlenstoff im derart behandelten SiC-Pulver wird bei 1100 °C durch Umschalten auf $CO_2$-Atmosphäre nach folgender Gleichung beseitigt:

$$C + CO_2 \rightarrow 2\,CO.$$

Dieses Verfahren ermöglicht es, ein von den Verunreinigungen $SiO_2$ und freier Kohlenstoff freies SiC-Pulver zu erhalten. Durch diese Art der Behandlung entfällt die bisher übliche, aber umständliche und schädliche oxidierende Glühung zur Entfernung von Kohlenstoff und eine nicht minder aufwendige chemische Nachreinigung zur Beseitigung von oberflächlich anhaftenden $SiO_2$-Oxidschichten.

In weiterer Ausgestaltung des Verfahrens findet ein SiC-Pulver Verwendung mit einer spezifischen Oberfläche zwischen 5 und 15 m$^2$/g, bevorzugt jedoch zwischen 10 und 15 m$^2$/g, und die Körnung soll von wenigstens 90% < 1 µm getragen und frei von anhaftenden C und $SiO_2$ sein.

Es hat sich als vorteilhaft erwiesen, die Formkörper unter Druck zu tränken.

Als Lieferanten organischen Kohlenstoffs kommen bei dem Verfahren aliphatische, alizyklische, aromatische und heterozyklische Kohlenwasserstoffe sowie die Kohlenhydrate in Betracht, die einzeln oder als Gemisch vorliegen können, z.B. aromatische Alkohole, Methylcellulosen, Alkohol/Aldehyd-Gemische, Ketone, aromatische Ringsysteme, Phenol-Resol-Harze, Crackbenzinrückstände. Das Verfahren bedient sich organischer Borverbindungen und organischer Aluminiumverbindungen, beispielsweise Verbindungen des B bzw. Al mit gestättigten, ungesättigten, aromatischen und heterozyklischen Kohlenwasserstoffen, die auch durch funktionelle Gruppen gekennzeichnet sein können. Beispiele organischer borhaltiger Kohlenwasserstoffe sind Borantrimethylamin, Boranbutylamin, Boranacetat, Tributylboren, Tri-n-butylborat, Borane-pyridine, Boran-intetrahydrofuran, Benzolboransäure, Triphenylboran, wobei mindestens letztere vier Verbindungen gleichzeitig als B- und C-Lieferant dienen.

Beispiele organischer Al-haltiger Kohlenwasserstoffe sind Diethylaluminiumethoxid, Tri-i-butylaluminium, Aluminium-i-propoxid, Al-butoxide und die folgenden als Al- und C-Lieferant dienenden Verbindungen Al-di(s-butoxid) acetoaceticesterchelate und Al-2,4-pentonedionate. Zu den in Betracht kommenden organischen Lösungsmitteln zählen gesättigte, ungesättigte und aromatische Kohlenwasserstoffe, die auch funktionelle Gruppen z.B. als Alkohole, Aldehyde, Ketone oder Carbonylverbindung aufweisen können, z.B. Isopropanol, Heptan, Cyclohexanon, Benzol, Aceton, Xylol, Benzin, Terpentin, Tetrahydrofuran, Tetralin, Tetrachlorkohlenstoff.

Die nach dem erfindungsgemässen Verfahren verwendeten gereinigten SiC-Pulver werden nach einem in der Keramik üblichen Granulierverfahren, z.B. dem Sprühtrocknen, zugeführt. Das SiC-Pulver liegt hier in reinster Form, aber undotiert vor, und die Zugabe der Sinterhilfsmittel erfolgt erst nach der Formgebung im Wege des Tränkens.

Durch die erfindungsgemässe Massnahme kann mit jedem Lösungsmittel angepastet werden und mit jedem beliebigen Bindemittel, welches in dem jeweiligen Lösungsmittel löslich ist, versetzt werden. Weiterhin kommt es zu keiner sich negativ auswirkenden Entmischung oder Anreicherung der Dotierungsmittel im SiC-Pulver bzw. -Granulat beim Verdunsten des Lösungsmittels, wie es sonst übliche keramische Aufbereitungs- und Trocknungsverfahren bewirken. Da sich keine Einschränkungen durch Lösungs- und/oder Mischungsprobleme der organischen bor-, aluminium- und kohlenstoffhaltigen Materialien mit dem Dispersionsmedium ergeben, unterliegt die Auswahl an geeigneten organischen, kohlenstoffhaltigen, carbonisierbaren Materialien praktisch keinen Einschränkungen. Im Falle des Tränkens vorgeglühter Formkörper treten auch keine Unverträglichkeiten zwischen Bindersystemen und organischen borhaltigen, aluminiumhaltigen und kohlenstoffhaltigen Materialien auf.

Das erfindungsgemässe Tränken des Grünlings oder des vorgesinterten Formkörpers zeichnet sich durch homogenste Verteilung der Sinteradditive aus, wie sie bei einer Nassmischung mit nachfolgenden Verfahrensschritten der Granulierung und Formgebung keinesfalls erreicht werden. Daraus resultieren höchste Sinterdichten und damit höchste Festigkeiten und ein homogenstes Gefüge im gesinterten Scherben. Ein weiterer Vorteil dieser Vorgehensweise ist eine erheblich geringere Streuung der physikalischen Eigenschaften, so z.B. der Festigkeit, ausgedrückt durch den Weibull-Modul m, der als Mass für die Streubreite einer Festigkeitsverteilung gelten kann.

Es ist durchaus möglich, den «grünen» oder vorgesinterten Formkörper mit einem Lösungsmittel (z.B. Isopropanol), welches das organische, kohlenstoffhaltige, carbonisierbare Material (z.B. aromatischer Alkohol) und das organische aluminiumhaltige Material (z.B. Tri-i-butylaluminium) enthält, zu tränken.

Des weiteren kann der Formkörper getränkt werden mit einem gelösten organischen Material, das C- und Bor-Lieferant in einem ist (z.B. Trphenylboran und/oder Boran-in-tetrahydrofuran gelöst in Benzol).

Ein weiterer Vorzug des erfindungsgemässen Verfahrens gegenüber dem Stand der Technik liegt in der Sinterung unter einer Si- und N-haltigen Atmosphäre oberhalb 1800 °C. Bis zur Temperatur von 1800 °C handelt es sich um eine für SiC an sich bekannte Sinteratmosphäre aus einem Inertgas oder einem Inertgas/Wasserstoff-Gemisch und gegebenenfalls um ein Vakuum in der Grössenordnung $< 10^{-3}$ Millibar. Die Si- und N-haltige Atmosphäre bildet sich aus der Zersetzung von Siliciumnitrid, welches in den Reaktionsraum mit eingebracht wird. Die Zersetzung von Siliciumnitrid und die Entstehung von Siliciumdampf und Stickstoff bei Temperaturen $>1800$ °C ist deshalb von Vorteil, weil die Umwandlung von β-SiC in α-SiC in diesem Temperaturbereich liegt und die Umwandlung von Stickstoff gehemmt bzw. unterdrückt wird. Dies wiederum hat den Vorteil der Ausbildunq eines feinkörnigeren, homogeneren Sintergefüges ohne ein Kristallwachstum in Form grossstengeliger SiC-Kristalle mit den bekannten Nachteilen für die Festigkeit bei Riesenkornwachstum.

Weiterhin wirkt das bei der Siliciumnitrid-Zersetzung entstehende Si in der Dampfphase der Zersetzung von SiC nach $SiC \rightarrow Si + C$ durch Erhöhung des Gleichgewichtsdrucks auf Seiten des Silicium entgegen.

Schliesslich weist das erfindungsgemässe Verfahren den Vorzug auf, dass ab 1800 °C in einer reduzierenden, kohlenstoffhaltigen Atmosphäre gesintert und diese reduzierende Sinteratmosphäre durch Volumenanteile an Kohlenmonoxid erzeugt wird. CO bewirkt die Reduzierung der letzten noch vorhandenen Reste von oberflächlichem $SiO_2$ und trägt damit erheblich zur Sinteraktivierung des SiC bei. Zudem reagiert das CO mit dem zugleich vorhandenen Siliciumdampf nach der Gleichung

$$2\,Si + CO \rightarrow SiC + SiO$$

zu Siliciumcarbid. Dadurch trägt die kohlenmonoxidhaltige Atmosphäre zu einer weiteren Verdichtung des SiC-Formkörpers bei. Der Sintervorgang kann z.B. entweder bei Temperaturen von 2200 °C und Normaldruck oder unter einem erhöhten Druck erfolgen. Dies letztere wirkt einer weitergehenden SiC-Zersetzung und Rekristallisation entgegen, was wiederum zu einem homogeneren Gefüge und damit zu höheren Festigkeiten führt.

Das erfindungsgemässe Verfahren wird anhand des folgenden Beispiels näher erläutert:

Beispiel

α- und β-SiC-Pulver mit einer spezifischen Oberfläche von 5–15 $m^2/g$ und einer mittleren Korngrösse von < 1 µm wird in ein ein organisches kohlenstoffhaltiges, carbonisierbares Material (z.B. Phenol-Resolharz) enthaltendes Lösungsmittel (z.B. Aceton) eingerührt. Das Lösungsmittel wird verdampft und das getrocknete Pulver einer Pyrolyse unter Schutzgas oder Vakuum und einer Temperaturbehandlung bei >1700 °C in einem metallischen Hochtemperaturofen unterzogen, wobei oberflächlich anhaftendes $SiO_2$ durch den entstandenen Kohlenstoff reduziert wird. Überschüssiger Kohlenstoff wird nun durch Umschalten auf reine $CO_2$-Atmosphäre bei einer Temperatur ⩾1100 °C oxidierend als CO entfernt. Es wird unter Vakuum abgekühlt.

Ein z.B. derart gereinigtes β-Siliciumcarbidpulver wird nun einem Granulierungsprozess unterworfen. Aus einer wässerigen SiC-Suspension, die 2% PVA-Binder und ein Gleitmittel enthält, wird mittels Sprühtrocknung ein rieselfähiges, hochverdichtbares Pulvergranulat erhalten, was jeder Formgebung, insbesondere einem Pressvorgang, unterworfen werden kann. Durch z.B. kaltisostatisches Pressen wird ein Formkörper einer Gründichte von ~70% hergestellt.

Nun wird entweder der grüne Formkörper oder der vorgeglühte Formkörper mit einem Lösungsmittel, welches das organische kohlenstoffhaltige carbonisierbare Material und das organische borhaltige Material enthält, getränkt. Die Konzentration an C-haltigem bzw. B-haltigem Material ist derart bemessen, dass es bis zu 2 Gew.-% Bor und bis zu 4 Gew.-% Kohlenstoff liefert.

Der getränkte Formkörper wird in ein Siliciumnitrid enthaltendes Reaktionsgefäss gebracht und nun der Pyrolse und dem normalen Schutzgassintern unter Argon unterworfen, wobei bei 1450 °C eine 30-minütige Haltezeit eingebracht wird. Ab 1800 °C wird die Atmosphäre durch die Zersetzung von Siliciumnitrid an Si und N angereichert. Zudem wird bei einer Temperatur >1800 °C dem Argonstrom Kohlenmonoxid bis 40 Vol-% zugemischt und weiter bis ca. 2200 °C aufgeheizt und hier eine Haltezeit von 20 Minuten eingelegt. Weitere 20 Minuten wird unter einem Überdruck von bis zu 10 bar gehalten. Zum Abkühlen wird der Ofen unter Schutzgas gehalten.

Tabelle 1 zeigt die Eigenschaften der Dichte und Biegebruchfestigkeit sowie die Streubreite letzterer (Weibulmodul m) nach dem herkömmlichen Verfahren aufbereiteter und gesinterter SiC-Formkörper (Probe 1) am Beispiel von β-SiC, sowie im Vergleich hierzu die Proben 2 und 3 nach Teilschritten des erfindungsgemässen Verfahrens aufbereitet und gesintert.

Tabelle 1

SiC-Körper mit unterschiedlichen Eigenschaften nach herkömmlichen Verfahren (Probe 1) und nach Teilschritten des erfindungsgemässen Verfahrens (Proben 2 und 3) und nach dem vollständigen erfindungsgemässen Verfahren (Probe 4).

| Probe | SiC-Material<br>Dotierung<br>Sinteratmosphäre | %TD<br>ρ | $\sigma_B$<br>[$N/mm^2$] | Weibullmodul<br>m |
|---|---|---|---|---|
| 1 | β-SiC<br>B, C<br>Argon | 92 | 330 | 5 |
| 2 | β-SiC pyrolytisch gereinigt<br>B-und C-getränkt<br>Argon | 95 | 400 | 8 |
| 3 | β-SiC pyrolytisch gereinigt<br>B- und C-getränkt<br>Argon/$Si_3N_4$-Konditionierung | 96 | 450 | 10 |
| 4 | β-SiC pyrolytisch gereinigt<br>B- und C-getränkt<br>Argon und CO-Atmosphäre<br>$Si_3N_4$-Konditionierung | >98 | >500 | >15 |

## Patentansprüche

1. Verfahren zum Herstellen eines dichten polykristallinen Formkörpers aus SiC mit einer Dichte von mindestens 98% der theoretischen Dichte des SiC und einer Biegebruchfestigkeit $>500\ N/mm^2$ bei einem Weibullmodul $m > 15$ durch Sintern von SiC unter Zugabe von C-haltigen Verbindungen und von B- und/oder Al-haltigen Verbindungen, gekennzeichnet durch folgende Verfahrensschritte:

a) Reinigen eines feinstgemahlenen verunreinigten und mit organischem C-haltigen Material vermischten α- und/oder β-SiC durch Pyrolyse unter Schutzgas oder Vakuum zur Befreiung von anhaftenden $SiO_2$-Verunreinigungen,

b) Reinigen von möglichen C-Resten durch Glühen in einer $CO_2$-Atmosphäre,

c) Zusatz eines temporären Bindemittels und Formgebung des gereinigten, B-, Al- und C-freien α- und/oder β-SiC durch ein übliches keramisches Formgebungsverfahren zu einem Formkörper,

d) Tränken des Formkörpers in grünem oder vorgesintertem Zustand mit in organischen Lösungsmitteln gelösten C-haltigen, carbonisierbaren, organischen Materialien und mit gegebenenfalls in organischen Lösungsmitteln gelösten organischen B- und /oder organischen Al-Verbindungen, wobei das C-, B- und/oder Al-haltige Material eine einzige Substanz sein kann,

e) Pyrolyse des getränkten Formkörpers und

f) Sintern bei Temperaturen >1800 °C in einer Si- und N-haltigen reduzierenden CO-enthaltenden Atmosphäre.

2. Verfahren nach Anspruch 1, gekennzeichnet durch die Verwendung eines SiC-Pulvers mit einer spezifischen Oberfläche zwischen 5 und $15\ m^2/g$ und einer Körnung von wenigstens 90% < 1 µm, das frei von anhaftendem C und $SiO_2$ ist.

3. Verfahren nach Anspruch 1 oder 2, dadurch gekennzeichnet, dass die Formkörper unter Druck getränkt werden.

4. Verfahren nach einem der Ansprüche 1 bis 3, dadurch gekennzeichnet, dass die Si- und N-haltige Atmosphäre aus Si-Nitrid gebildet wird und dass die reduzierende Atmosphäre aus CO besteht und 1–40 Vol-% der Gesamtatmosphäre beträgt.

5. Verfahren nach einem der Ansprüche 1 bis 4, dadurch gekennzeichnet, dass der Sintervorgang in einem Inertgas-CO-Gemisch bei Normaldruck oder Überdruck bis zu 20 bar erfolgt.

## Revendications

1. Procédé pour la fabrication d'un corps de moulage dense polycristallin en SiC ayant une densité d'au moins 98% de la densité théorique du SiC et une résistance à la flexion $>500\ N/mm^2$ pour un module de Weibull de $m > 15$ par frittage de SiC sous addition de composés contenant du C et de composés contenant du B et/ou de l'Al, caractérisé par les étapes opératoires suivantes:

a) nettoyage d'un α- et/ou d'un β-SiC finement moulu, impur, et mélangé avec une matière organique contenant du C, par pyrolyse sous gaz protecteur ou sous vide pour le libérer des impuretés de $SiO_2$ adhérentes,

b) nettoyage des résidus éventuels de C par recuit dans une atmosphère de $CO_2$,

c) addition d'un liant provisoire et modelage de l'α- et/ou du β-SiC purifié exempt de B, d'Al et de C par un procédé de modelage céramique usuel pour en faire un corps moulé,

d) imprégnation du corps de moulage à l'état vert ou préfritté par des matières organiques carbonisables contenant du C, dissoutes dans des solvants organiques et éventuellement par des composés organiques de B et/ou des composés organiques d'Al dissous dans des solvants organiques, la matière contenant du C-, du B- et/ou de l'Al- pouvant être une seule et même substance,

e) pyrolyse du corps moulé imprégné, et

f) frittage à des températures >1800 °C dans une atmosphère réductrice contenant du CO et contenant du Si et du N.

2. Procédé selon la revendication 1, caractérisé par l'utilisation d'une poudre de SiC ayant une surface spécifique comprise entre 5 et $15\ m^2/g$ et une granulométrie d'au moins 90% < 1 µm, laquelle est exempte de C et de $SiO_2$ adhérents.

3. Procédé selon la revendication 1 ou 2, caractérisé en ce que les corps de moulage sont imprégnés sous pression.

4. Procédé selon l'une des revendications 1 à 3, caractérisé en ce que l'atmosphère contenant du Si et du N est formée à partir de nitrure de silicium et en ce que l'atmosphère réductrice consiste en du CO et constitue 1–40% en volume de l'atmosphère totale.

5. Procédé selon l'une des revendications 1 à 4, caractérisé en ce que l'opération de frittage s'effectue dans un mélange de gaz inerte-CO à une pression normale ou à une surpression jusqu'à 20 bars.

## Claims

1. A process for the manufacture of a dense polycrystalline shaped body of SiC with a density of at least 98% of the theoretical density of the SiC and a bending strength $>500\ N/mm^2$ with a Weibull modulus $m > 15$ by sintering SiC with the addition of compounds containing C and compounds containing B and/or Al, characterised by the following process steps:

a) Purification of a pulverised, contaminated α- and/or β-SiC mixed with organic material containing C, by pyrolysis under a protective gas or vacuum for the liberation of adhering $SiO_2$ impurities,

b) Cleansing from possible C residues by heating to incandescence in a $CO_2$ atmosphere,

c) Addition of a temporary binding agent and shaping of the purified α- and/or β-SiC, free of B, Al and C, by a conventional ceramic shaping process to form a shaped body,

d) Impregnation of the shaped body, in the green or presintered state with carbonizable, organic materials containing C dissolved in organic solvents and with organic B and/or organic Al

compounds possibly dissolved in organic solvents, wherein the material containing C, B and/or Al may be a single substance,

e) Pyrolysis of the impregnated shaped body and

f) Sintering at temperatures $>1800$ °C in a reducing atmosphere containing CO and containing Si- and N-.

2. A process as claimed in Claim 1, characterised by the use of an SiC powder with a specific surface area of between 5 and 15 $m^2/g$ and a grain size of at least 90% $< 1$ µm, which in free of adhering C and $SiO_2$.

3. A process as claimed in Claim 1 or 2, characterised in that the shaped bodies are impregnated under pressure.

4. A process as claimed in any one of Claims 1 to 3, characterised in that the atmosphere containing Si and N is formed from Si nitride and that the reducing atmosphäre consists of CO and amounts to 1–40% by volume of the total atmosphere.

5. A process as claimed in any one of Claims 1 to 4, characterised in that the sintering operation is effected in a mixture of inert gas and CO at normal pressure or excess pressure up to 20 bar.